# EUROPEAN PATENT SPECIFICATION

(11) **EP 3 724 149 B1**
(45) Date of publication and mention of the grant of the patent: **07.02.2024**
(21) Application number: 18815211.0
(22) Date of filing: 12.12.2018
(51) Int. Cl.: C04B 41/50, C04B 41/52, C04B 41/70, C04B 41/68, C04B 41/00, C04B 28/00, C04B 28/26, C04B 111/00

(54) **GEOPOLYMERIC COATING SYSTEM FOR FIBER CEMENT PRODUCTS**
GEOPOLYMERES BESCHICHTUNGSSYSTEM FÜR FASERZEMENTPRODUKTE
SYSTÈME DE REVÊTEMENT GÉOPOLYMÈRE POUR PRODUITS EN FIBROCIMENT

(30) Priority: 13.12.2017 EP 17306767
(43) Date of publication of application: 21.10.2020
(73) Proprietor: Etex France Exteriors SAS, 78300 Poissy (FR)
(72) Inventor: DAVIDOVITS, Joseph, 02100 Saint-Quentin (FR); DUVAL, Guillaume, 76320 Saint Pierre les Elbeufs (FR); ALLERON, Carine, 76120 Le Grand Quevilly (FR); DAMETTE, Olivier, 27430 Saint Etienne du Vauvray (FR)
(74) Representative: Etex Services NV - Etex IPSC
(86) International application number: PCT/EP2018/084604
(87) International publication number: WO 2019/115634

(56) References cited:
- EP-A2- 0 512 269
- US-A1- 2012 240 825
- US-A1- 2013 206 033
- TEMUUJIN J ET AL: "Preparation of metakaolin based geopolymer coatings on metal substrates as thermal barriers", APPLIED CLAY SCIENCE, ELSEVIER, AMSTERDAM, NL, vol. 46, no. 3, November 2009 (2009-11), pages 265-270, XP026716691, ISSN: 0169-1317, DOI: 10.1016/J.CLAY.2009.08.015 [retrieved on 2009-08-24]
- DUXSON ET AL: "The effect of alkali and Si/Al ratio on the development of mechanical properties of metakaolin-based geopolymers", COLLOIDS AND SURFACES A: PHYSIOCHEMICAL AND ENGINEERING ASP, ELSEVIER, AMSTERDAM, NL, vol. 292, no. 1, 16 December 2006 (2006-12-16), pages 8-20, XP005805780, ISSN: 0927-7757, DOI: 10.1016/J.COLSURFA.2006.05.044
- GARG NISHANT ET AL: "Mechanism of zinc oxide retardation in alkali-activated materials: an in situ X-ray pair distribution function investigation", JOURNAL OF MATERIALS CHEMISTRY A, vol. 5, no. 23, 22 March 2017 (2017-03-22) , pages 11794-11804, XP093025486, GB ISSN: 2050-7488, DOI: 10.1039/C7TA00412E

## Description

### Field of the invention

The present invention relates to a geopolymeric coating composition and its use for coating fiber cement products. Moreover, the present invention provides processes for producing such coated fiber cement products as well as to the fiber cement products obtainable thereby.

### Background of the invention

Fiber cement products are well known and widely used as building materials.

In order to protect these materials from potential transport and installation damages as well as defects due to weathering and humidity, one or more coating layers are often applied on the outer surface during production. In addition, decorative such as colored coatings were developed to provide fiber cement products with an aesthetically desired look at the outer surface.

Such coatings need to be extremely weatherproof, i.e. must exhibit a very high long-term durability with respect to UV radiation, heat, freezing and thawing cycles, and the effects of water and moisture. Moreover, the coating must be resilient to the high alkalinity of the fiber cement, and suppress its tendency to develop lime deposits known as efflorescence. Efflorescence is a typically occurring undesirable phenomenon with fiber cement products being the tendency of salts that are present within the fiber cement structure to migrate to the surface of the fiber cement products with white spots becoming visible at the outer surface. Furthermore, the coating must satisfy any aesthetic demands. Other requirements for the coating are: sufficient adhesion to the fiber cement, easy applicability during production and easy to clean.

Typical coatings for fiber cement products are usually of organic nature and include acrylic and polyurethane coatings.

Acrylic coatings have some disadvantages. An inconvenience of thermoplastic coating systems such as acrylics in general is their soft surface and hence their insufficient resistance against mechanical wear. Moreover, UV weathering resistance and resistance to chemicals of thermoplastic coating systems generally appear to be insufficient.

Polyurethane coatings, which can be heat or UV-cured, are very UV and weather resistant and hence outperform acrylics in that respect. But two component polyurethane coatings suffer from long curing times and often contain harmful solvents. Another disadvantage of these coatings is that the necessary degree of matting can only be achieved with great difficulty.

Geopolymers are three-dimensional network structures prepared by activating aluminosilicate sources such as fly ash, furnace slag or metakaolin with alkaline liquids (alkali hydroxide and/or alkali silicate with alkali being Na or K) and curing at a moderate temperature.

Geopolymers are described as having potential in fire resistant and protective coatings for surfaces such as metal and concrete (Review on Current Geopolymer as a Coating Material, by M.S. Siti Salwa, A.M. Mustafa Al Bakri, H. Kamarudin, C.M. Ruzaidi, M. Binhussain and S.Z. Sharifa Zaliha in Australian Journal of Basic and Applied Sciences, 7(5):246-257, 2013). However their potential use as fiber cement coating has not been described hitherto. Temuujin J et al, Applied Clay Science, vol. 46, no 3 (November 2009), 265-270, relates to preparation of metakaolin based geopolymer coatings on metal substrates as thermal barriers. It discloses a composition comprising metakaolin, a sodium silicate solution, wherein the molar ratio of SiO₂ versus Na₂O in said sodium silicate is 2. The composition further comprises NaOH as an additive and water and wherein the molar ratio of Si versus Al in said coating composition is 2. Garg Nishan et al, Journal of Materials Chemistry A, vol. 5, no 23 (2017-03-22), pages 11794-11804 discloses mechanisms of zinc oxide retardation in alkali-activated materials. US2013/206033A1 discloses coating compositions applied on a concrete slab comprising 11-15 wt% of metakaolin and/or fly ash based on the coating composition, and further comprising a sodium silicate solution wherein the molar ratio of SiO₂ to Na₂O in said sodium silicate solutions is 1.5 or 2.1, and water. The coating composition further comprises 0-7% slag sand powder, 52-59 wt% of quartz sand or solid glass spheres, 0-4 wt% of microsilica as fillers and/or additives. The molar ratio of Si versus Al in said coating compositions is preferably between 1.8 and 2.2, and between 4.7 and 5.3. US2012/240825A1 relates to mixtures comprising alkali-activatable aluminosilicate binders and organosiloxane compounds for reducing shrinkage in alkali-activatable aluminosilicate binders and for hydrophobization of alkali-activatable aluminosilicate binders. EP0512269A2 relates to a mixture of alkaline silicate solution, pulverulent latent-hydraulic material and additives, such as inert additives and/or opening materials or fillers, reinforcing agents, setting accelerators and moisture regulators. The mixture may be applied for the large-area coating of various substrates in the building trade, for example by the dense-flow spraying process.

### Summary of the invention

An objective of the present invention is to replace the typical organic coating on fiber cement products with a mineral coating, which overcomes the aforementioned disadvantages.

In general, the objective is thus to propose a composition for the coating of fiber cement products comprising essentially only mineral substances that fulfills all of the requirements for a protective or decorative coating for fiber cement products as described above.

An object of the present invention is to provide a mineral coating for fiber cement products, with very good surface properties and physical properties (mechanical, chemical and heat resistance). The surface should be smooth with a high resistance against abrasion.

In this regard, the present inventors have developed a novel and improved mineral geopolymeric coating composition for fiber cement products.

In particular, it was found that by providing fiber cement products with at least one coating layer obtained from a geopolymeric coating composition comprising from about 5 to about 60% by weight of metakaolin and/or fly ash, an alkali metal (M) silicate wherein the molar ratio of SiO₂ versus M₂O in said alkali metal silicate is between about 1 and about 2, preferably between about 1.2 and about 1.5, and water and wherein the molar ratio of Si versus Al in said coating composition is between about 1 and about 5.5, preferably between about 2.3 and about 5.3, a decorative and protective fiber cement product is obtained with excellent properties.

In a first aspect, the present invention provides a geopolymeric coating composition as claimed in claim 1 comprising from about 5 to about 60% by weight of metakaolin and/or fly ash, an alkali metal (M) silicate wherein the molar ratio of SiO₂ versus M₂O in said alkali metal silicate is between about 1 and about 2, preferably between about 1.2 and about 1.5, and water and wherein the molar ratio of Si versus Al in said coating composition is between about 1 and about 5.5, preferably between about 2.3 and about 5.3, and further comprising an accelerator consisting of zinc oxide (ZnO), to trap free alkali silicate thereby stopping efflorescence.

In further particular embodiments, the geopolymeric coating composition comprises sodium silicate and/or potassium silicate, but preferably only potassium silicate. In yet further particular embodiments, the geopolymeric coating composition is characterized by an alkali metal silicate concentration of between about 10 and about 20% by weight of dry material.

In particular embodiments, the geopolymeric coating composition further comprises ground blast furnace slag and/or fumed silica. In further particular embodiments, the geopolymeric coating composition further comprises mineral pigments in an amount of about 5 to about 15% by weight and/or mineral fillers in an amount of about 10 to about 60% by weight.

In a second aspect, the present invention provides fiber cement products provided on at least part of their outer surface with a least one cured coating layer obtained from a geopolymeric coating composition comprising from about 5 to about 60% by weight of metakaolin and/or fly ash, an alkali metal (M) silicate wherein the molar ratio of SiO₂ versus M₂O in said alkali metal silicate is between about 1 and about 2, preferably between about 1.2 and about 1.5, and water and wherein the molar ratio of Si versus Al in said coating composition is between about 1 and about 5.5, preferably between about 2.3 and about 5.3, and wherein said coating composition further comprising an accelerator consisting of zinc oxide (ZnO) to trap free alkali silicate thereby stopping efflorescence.

In particular embodiments of these fiber cement products, only one single coating layer is provided obtained from such a geopolymeric coating composition further comprising ground blast furnace slag and fumed silica.

In further particular embodiments of these fiber cement products, two coating layers on top of each other are provided, a first coating layer provided on the surface of the fiber cement and obtained from such a geopolymeric coating composition further comprising ground blast furnace slag and no fumed silica and a second coating layer provided on the surface of the first coating layer obtained from such a geopolymeric coating composition further comprising fumed silica and no ground blast furnace slag.

In a third aspect, the present invention provides processes for manufacturing such coated fiber cement products, said processes at least comprising the steps of:
- providing a cured fiber cement product;
- applying to at least part of the outer surface of the fiber cement product a coating composition comprising from about 5 to about 60% by weight of metakaolin and/or fly ash, an alkali metal (M) silicate wherein the molar ratio of SiO₂ versus M₂O in said alkali metal silicate is between about 1 and about 2, preferably between about 1.2 and about 1.5, and water and wherein the molar ratio of Si versus Al in said coating composition is between about 1 and about 5.5, preferably between about 2.3 and about 5.3 and wherein the coating composition further comprises an accelerator consisting of zinc oxide (ZnO) to trap free alkali silicate thereby stopping efflorescence;
- curing said coating composition so as to obtain a coated fiber cement product.

In particular embodiments of these processes for producing fiber cement products a single coating layer is provided and said curing step comprises subjecting the fiber cement product to an elevated temperature of preferably about 80 to about 90°C for at least about 30 minutes.

In further particular embodiments of these processes for producing fiber cement products coated with at least two coating layers on top of each other are provided, said processes at least comprising the steps of:
- providing a cured fiber cement product;
- applying to at least part of the outer surface of the fiber cement product a first coating composition comprising from about 5 to about 60% by weight of metakaolin and/or fly ash, an alkali metal (M) silicate wherein the molar ratio of SiO₂ versus M₂O in said alkali metal silicate is between about 1 and about 2, preferably between about 1.2 and about 1.5, and water and wherein the molar ratio of Si versus Al in said coating composition is between about 1 and about 5.5, preferably between about 2.3 and about 5.3 wherein the first coating composition further comprises an accelerator consisting of zinc oxide (ZnO) to trap free alkali silicate thereby stopping efflorescence;

- partially curing said first coating composition;
- applying a second coating composition comprising from about 5 to about 60% by weight of metakaolin and/or fly ash, an alkali metal (M) silicate wherein the molar ratio of SiO₂ versus M₂O in said alkali metal silicate is between about 1 and about 2, preferably between about 1.2 and about 1.5, and water and wherein the molar ratio of Si versus Al in said coating composition is between about 1 and about 5.5, preferably between about 2.3 and about 5.3, onto the surface of the first coating composition before said first coating composition has been fully cured;
- curing said second coating composition.

In still further particular embodiments of these processes for producing fiber cement products coated with at least two coating layers on top of each other the curing of the first coating composition involves subjecting the fiber cement product to ambient temperature for about 10 minutes and the curing of the second coating composition involves subjecting the fiber cement product to an elevated temperature of preferably about 80 to about 90°C for at least about 60 minutes.

The coated fiber cement products of the invention may be used as building materials. In particular embodiments, the fiber cement products produced by the processes of the present invention can be used to provide an outer surface to walls, both internal as well as external, a building or construction, e.g. as façade plate, siding, etc.

The independent and dependent claims set out particular and preferred features of the invention.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention.

### Description of illustrative embodiments

The present invention will be described with respect to particular embodiments.

It is to be noted that the term "comprising", used in the claims, should not be interpreted as being restricted to the means listed thereafter; it does not exclude other elements or steps. It is thus to be interpreted as specifying the presence of the stated features, steps or components as referred to, but does not preclude the presence or addition of one or more other features, steps or components, or groups thereof. Thus, the scope of the expression "a device comprising means A and B" should not be limited to devices consisting only of components A and B. It means that with respect to the present invention, the only relevant components of the device are A and B.

Throughout this specification, reference to "one embodiment" or "an embodiment" are made. Such references indicate that a particular feature, described in relation to the embodiment is included in at least one embodiment of the present invention. Thus, appearances of the phrases "in one embodiment" or "in an embodiment" in various places throughout this specification are not necessarily all referring to the same embodiment, though they could. Furthermore, the particular features or characteristics may be combined in any suitable manner in one or more embodiments, as would be apparent to one of ordinary skill in the art.

The following terms are provided solely to aid in the understanding of the invention.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps.

The recitation of numerical ranges by endpoints includes all numbers and fractions subsumed within the respective ranges, as well as the recited endpoints.

The term "about" as used herein when referring to a measurable value such as a parameter, an amount, a temporal duration, and the like, is meant to encompass variations of +/-10% or less, preferably +/-5% or less, more preferably +/-1% or less, and still more preferably +/-0.1% or less of and from the specified value, insofar such variations are appropriate to perform in the disclosed invention. It is to be understood that the value to which the modifier "about" refers is itself also specifically, and preferably, disclosed.

The terms "(fiber) cementitious slurry" or "(fiber) cement slurry" as referred to herein generally refer to slurries at least comprising water, fibers and cement. The fiber cement slurry as used in the context of the present invention may also further comprise other components, such as but not limited to, limestone, chalk, quick lime, slaked or hydrated lime, ground sand, silica sand flour, quartz flour, amorphous silica, condensed silica fume, microsilica, metakaolin, wollastonite, mica, perlite, vermiculite, aluminum hydroxide, pigments, anti-foaming agents, flocculants, and other additives.

"Fiber(s)" present in the fiber cement slurry as described herein may be for example process fibers and/or reinforcing fibers which both may be organic fibers (typically cellulose fibers) or synthetic fibers (polyvinylalcohol, polyacrilonitrile, polypropylene, polyamide, polyester, polycarbonate, etc.).

"Cement" present in the fiber cement slurry as described herein may be for example but is not limited to Portland cement, cement with high alumina content, Portland cement of iron, trass-cement, slag cement, plaster, calcium silicates formed by autoclave treatment and combinations of particular binders. In more particular embodiments, cement in the products of the invention is Portland cement.

A "(fiber cement) sheet" as used herein, also referred to as a panel or a plate, is to be understood as a flat, usually rectangular element, a fiber cement panel or fiber cement sheet being provided out of fiber cement material. The panel or sheet has two main faces or surfaces, being the surfaces with the largest surface area. The sheet can be used to provide an outer surface to walls, both internal as well as external, a building or construction, e.g. as façade plate, siding, etc.

The invention will now be further explained in detail with reference to various embodiments. It will be understood that each embodiment is provided by way of example and is in no way limiting to the scope of the invention. In this respect, it will be clear to those skilled in the art that various modifications and variations can be made to the present invention without departing from the scope of the invention. For instance, features illustrated or described as part of one embodiment, can be used in another embodiment to yield a still further embodiment. Thus, it is intended that the present invention covers such modifications and variations as encompassed within the scope of the appended claims and equivalents thereof.

The present invention seeks to provide mineral compositions for coating fiber cement products, yielding coatings with very good surface properties and physical properties (mechanical, chemical and heat resistance).

In order to solve these problems, the present inventors have developed novel and improved geopolymeric coating compositions for fiber cement products.

Thus, in a first aspect, the present invention provides a geopolymeric coating composition comprising from about 5 to about 60% by weight of metakaolin and/or fly ash, an alkali metal (M) silicate wherein the molar ratio of SiO₂ versus M₂O in said alkali metal silicate is between about 1 and about 2, preferably between about 1.2 and about 1.5, and water and wherein the molar ratio of Si versus Al in said coating composition is between about 1 and about 5.5, preferably between about 2.3 and about 5.3, and further comprising an accelerator consisting of zinc oxide (ZnO) to trap free alkali silicate thereby stopping efflorescence.

Geopolymers are amorphous to semi-crystalline three-dimensional silico-aluminate materials. Geopolymerization takes place when reactive aluminosilicate materials with less or no calcium oxide (such as metakaolin, fly ash, blast furnace slag) are rapidly dissolved in highly alkaline solutions, in the presence of alkali hydroxide (sodium/potassium hydroxide, NaOH/KOH) and silicate solution (sodium/potassium silicate, Na₂SiO_{3/}K₂SiO₃) to form free tetrahedral units, SiO₄ and AlOₐ in the solution. With the development of reaction, water is gradually split out and these tetrahedral units are alternatively linked to polymeric precursors (-SiO₄-AlO₄- or -SiO₄-AlO₄-SiO₄- or SiO₄-AlO₄-SiO₄-SiO₄-) by sharing oxygen atoms forming amorphous geopolymeric structures with a three-dimensional network structure.

According to the present invention metakaolin and/or fly ash is used in the geopolymeric coating composition as the prime aluminosilicate source in an amount of about 5 to about 60% by weight based on the total coating composition.

According to an embodiment of the present invention metakaolin, being a purer source of aluminosilicate than fly ash, is preferably used as prime aluminosilicate source. Metakaolin is a de-hydroxylated form of the clay mineral kaolinite with 4-, 5- and 6-coordinated aluminum ions in alumina polyhedron sheet structures and is generally commercially available from a wide range of suppliers such as BASF, Imerys Performance Minerals and Argeco. Particularly suitable metakaolins for use in the present invention are those manufactured through a flash calcination process (compared to those produced through traditional rotary kiln calcination), for example, ARGICAL M1200S available from Imerys Refractory Minerals, METACAL 2000 available from Caltra and the flash-calcined metakaolins available from Argeco.

The metakaolin is preferably used according to the present invention in an amount of about 5 to about 20% by weight of the coating composition, more preferably about 10 to about 20% by weight, most preferably about 10 to about 15% by weight.

Fly ash is the by-product formed during power generation by the combustion of coal. It comprises fine particles which rise with the flue gases (ash that does not rise is termed bottom ash) and is collected by electrostatic precipitators or other filtration equipment prior to the flue gases reaching the exhaust chimneys. The source and chemical composition of coal and the operating conditions of the combustion process have a major impact on the resulting fly ash chemical composition and physical properties. The amount of alkali soluble (amorphous) fly ash material is the critical quantity for geopolymer synthesis; allowance must also be made for the fact that not all the amorphous material is accessible by the activating alkali solutions. Therefore the fly ash is preferably used according to the present invention in an amount of about 20 to about 60% by weight of the coating composition. Due to its highly variable chemical composition the amount of fly ash should be selected such that the amount of alkali soluble fly ash material is in the range 5 to 20% by weight. Only Class F fly ash (according to ASTM C618-12) can be regarded as pozzolanic material and hence is the preferred fly ash to be used in the present invention.

Alkali metal silicates can be represented as M₂O.SiO₂ where M represents an atom of an alkali metal (such as sodium, potassium and lithium) and they differ in the ratio M₂O:SiO₂. These products are commercially available as aqueous solutions under the name waterglass.

The molar ratio SiO₂ versus M₂O in the alkali metal silicate (also known as modulus) for use according to the present invention is between about 1 and about 2, preferably between about 1.2 and about 1.5, most preferably between about 1.2 and about 1.3. Working within these ranges is important for reactivity but also working outside of these ranges could result in a lack or excess of the alkali metal species and silicate which could lead to efflorescence and a too high water sensitivity of the coating surface.

The distribution of silicate anion species in the alkali metal silicate can be altered by the addition of alkali or dilution of water, known as respeciation. This causes the solution to change to the species distribution appropriate to the new modulus. A full strength solution can take up to 48 hours to respeciate at room temperature. In very dilute solutions it can occur in a matter of minutes.

It has been found that the use of potassium silicate is highly satisfactory and while other alkali metal silicates such as sodium and lithium may be used, they are less preferable on performance grounds. For example, the use of sodium silicate may generate more efflorescence. The use of potassium silicate shows several advantages over sodium silicates: it does not develop efflorescence, displays higher solubility and compatibility with other additives and imparts higher refractoriness, flowing at higher temperatures than the sodium analogues. Mixtures of potassium silicates and sodium silicates and/or lithium silicates can be used as well.

Examples of preferred commercially available potassium silicates include Geosil 14515 having a molar ratio of SiO₂ versus K₂O of 1.5, available from Woellner and alkali metal silicates available from PQ Corporation.

In order to lower the molar ratio of SiO₂ versus K₂O thereby increasing reactivity alkali metal silicates can be mixed with alkali hydroxide. For example, a potassium silicate with a molar ratio of SiO₂ versus K₂O of 1.23 can be obtained by mixing Geosil 14515 with appropriate amounts of potassium hydroxide and water.

The weight ratio alkali metal silicate versus metakaolin/fly ash is adjusted such that the Si/Al molar ratio in the geopolymeric coating composition is in the range of about 1 to about 5.5, preferably about 2.3 to about 5.3. If this ratio is below 1 the geopolymeric coating tends to degrade under wet conditions. If this ratio is greater than 5.5 the mechanical resistance of the geopolymeric coating decreases.

The amount of alkali metal silicate in the coating composition of the present invention is usually in the range of about 10 to about 20% by weight calculated as dry material, preferably in the range of about 12 to about 16% by weight calculated as dry material.

According to an embodiment of the present invention the coating composition further comprises ground granulated blast furnace slag (GGBS). GGBS sometimes simply referred to as "slag" is a glassy granular material formed when molted blast-furnace slag is rapidly chilled, as by immersion in water. It is a non-metallic product, consisting of silicates and aluminosilicates of calcium and other bases, developed in a molten condition simultaneously with iron in a blast furnace. Adding GGBS to the coating composition of the present invention improves the adhesion to the fiber cement. A suitable GGBS to be used according to the present invention is commercially available from ECOCEM under the name ECOCEM.

According to an embodiment the GGBS is added in an amount of about 1 to about 15% by weight on total coating composition, preferably between about 1 and about 5% by weight. In amount levels below 1% by weight the GGBS is not effective; in amount levels above 15% by weight the reaction speed becomes too high.

According to another embodiment of the present invention the coating composition further comprises fumed silica, optionally in combination with GGBS. Adding fumed silica to the present coating composition improves the mechanical resistance of the coating. According to an embodiment fumed silica is added in an amount of about 4 to about 20% by weight on total coating composition. In amount levels below 4% by weight the fumed silica is not effective; in amount levels above 20% by weight it may increase the Si/AI ratio to above 5.5 leading to a decrease in mechanical resistance.

In some embodiments of the present invention wherein the geopolymeric coating composition also comprises GGBS next to fumed silica, the fumed silica is present in an amount of between about 4 to about 8 % by weight, preferably about 5 to about 7 % by weight on total coating composition leading to a maximum molar ratio of Si versus Al of 3.7.

According to specific embodiments the coating composition can further contain mineral fillers such as calcite, dolomite, talc, silica, mica and/or can be tinted with common mineral pigments such as mineral oxides and carbon black.

Mineral fillers are generally present in an amount of between about 10 to about 60% by weight, preferably about 15 to about 50% by weight based on total coating composition. Pigments are generally present in an amount of between about 5 to about 15% by weight, preferably about 5.5 to about 10% by weight based on total coating composition. Below 5% by weight of pigments the color is not homogeneous and cracks are being formed in the coating; above 60% by weight of mineral fillers the formulation becomes too thick to be applied.

Mineral fillers and mineral pigments suitable for use in the present coating composition are known in the art and are not critical to the invention.

The pigments may be opaque pigments, semi-opaque pigments and/or transparent pigments or a combination thereof. Pigments provide color, hiding, and/or are present as extenders. Suitable pigments include those in the form of titanium dioxide, iron oxides, calcium carbonate, spinell pigments, titanates, clay, aluminum oxide, silicon dioxide, magnesium oxide, magnesium silicate, barium metaborate monohydrate, sodium oxide, potassium oxide, talc, barytes, zinc oxide, zinc sulfide and mixtures thereof.

Examples of suitable mineral fillers are silicates, barium sulphates, alkaline-earth metal carbonates, preferably calcium carbonate in the form of calcite or lime, dolomite, and also aluminum silicates or magnesium silicates, e.g. talc, alumina hydrate (sometimes called simply "hydrate"), magnesium carbonate (sometimes called simply "magnesia", blanc fixe, barytes, and clays.

The present coating composition may further comprise also usual auxiliaries, e.g., anti-blistering agents, rheology modifiers, surfactants, wetting agents, viscosity modifiers, dispersants, defoamers, hydrophobizing agents, fibers, waxes, perfumes and other usual constituents.

In addition to the above, the coating composition further may comprise one or more additives included for properties, such as regulating flow and leveling, sheen, foaming, yellowing, resistance to stains, cleaner, burnish, block, mildew, dirt, or corrosion, and for retaining color and gloss.

Further the coating compositions may include one or more functional extenders to increase coverage, reduce cost, achieve durability, alter appearance, control rheology, and/or influence other desirable properties.

According to the present invention the coating composition comprises an accelerator consisting of zinc oxide to trap free alkali silicate in the matrix thereby stopping efflorescence. According to certain embodiments of the present invention, the coating composition further comprises a retarder to increase the setting time of the retarder. Examples of suitable retarders include potassium or sodium citrate.

In general such accelerators are added in amounts varying between about 1 and about 5% by weight based on total coating composition. Amounts less than 1 wt% are not efficient; more than 5 wt% gives a too high reaction speed.

Generally such retarders are added in amounts varying between about 5 and about 15% by weight, preferably between about 7 and about 12% by weight. Amounts less than 5 wt% have hardly any effect; more than 15 wt% can disturb the polycondensation reaction.

Other particularly suitable additives for use according to the present invention are wetting agents for viscosity reduction and substrate wetting, generally in amounts between about 0.01 and 0.5% by weight based on total coating composition. Using amounts in excess of 0.5 wt% may disturb the chemical reaction leading to the geopolymer.

Suitable wetting agents include aqueous salts of phosphonic acid, polyphosphate salts and potassium and sodium salts of polyacrylic acid.

Another suitable further additive for use in the coating composition of the present invention is a flexibilizer to reduce formation of cracks during the curing by softening the matrix.

Suitable flexibilizers can be short chain polyols such as glycerol and mono propylene glycol. Longer chain polyols can also be used, having a molecular weight not exceeding about 700, such as polyethyleneglycol.

In order to be effective these flexibilizers are added in amounts varying between about 0.5 to about 2% by weight based on total coating composition. Higher amounts may create exudation problems on the surface of the coating.

The present coating compositions are typically formulated to include between about 50 and about 85 %, preferably between about 55 and 76% by weight, most preferably about 60% by weight of dry solids with the balance of the coating composition being water. Water is present in some of the components of the coating compositions such as waterglass. Water is generally also added separately.

In a second aspect, the present invention provides coated fiber cement products, which fiber cement products at least comprise on at least part of the outer surface of the fiber cement one or more cured layers of a coating composition which composition at least comprises from about 5 to about 60% by weight of metakaolin and/or fly ash, an alkali metal (M) silicate wherein the molar ratio of SiO₂ versus M₂O in said alkali metal silicate is between about 1 and about 2, preferably between about 1.2 and about 1.5, and water and wherein the molar ratio of Si versus Al in said coating composition is between about 1 and about 5.5, preferably between about 2.3 and about 5.3, wherein the coating composition further comprises an accelerator consisting of zinc oxide (ZnO) to trap free alkali silicate thereby stopping efflorescence.

Further characteristics of the coating layer are as defined and described above for the coating compositions according to the invention.

In the context of the present invention, fiber cement products are to be understood as cementitious products comprising cement and synthetic (and optionally natural) fibers. The fiber cement products are made out of fiber cement slurry, which is formed in a so-called "green" fiber cement product, and then cured.

Dependent to some extent on the curing process used, the fiber cement slurry typically comprises water, process or reinforcing fibers which are synthetic organic fibers (and optionally also natural organic fibers, such as cellulose), cement (e.g. Portland cement), limestone, chalk, quick lime, slaked or hydrated lime, ground sand, silica sand flour, quartz flour, amorphous silica, condensed silica fume, microsilica, kaolin, metakaolin, wollastonite, mica, perlite, vermiculite, aluminum hydroxide (ATH), pigments, anti-foaming agents, flocculants, and/or other additives. Optionally color additives (e.g. pigments) are added, to obtain a fiber cement product which is so-called colored in the mass.

In particular embodiments, the fiber cement products of the invention have a thickness of between about 4 mm and about 200 mm, in particular between about 6 mm and about 200 mm, more in particular between about 8 mm and about 200 mm, most in particular between about 10 mm and about 200 mm.

The fiber cement products as referred to herein include roof or wall covering products made out of fiber cement, such as fiber cement sidings, fiber cement boards, flat fiber cement sheets, corrugated fiber cement sheets and the like. According to particular embodiments, the fiber cement products according to the invention can be roofing or façade elements, flat sheets or corrugated sheets.

The fiber cement products of the present invention comprise from about 0.1 to about 5 weight%, such as particularly from about 0.5 to about 4 weight% of fibers, such as more particularly between about 1 to 3 weight% of fibers with respect to the total weight of the fiber cement product.

According to particular embodiments, the fiber cement products according to the invention are characterized in that it comprises fibers chosen from the group consisting of cellulose fibers or other inorganic or organic reinforcing fibers in a weight % of about 0.1 to about 5. In particular embodiments, organic fibers are selected from the group consisting of polypropylene, polyvinylalcohol polyacrylonitrile fibers, polyethylene, cellulose fibres (such as wood or annual kraft pulps), polyamide fibers, polyester fibers, aramide fibers and carbon fibers. In further particular embodiments, inorganic fibers are selected from the group consisting of glass fibers, rockwool fibers, slag wool fibers, wollastonite fibers, ceramic fibers and the like. In further particular embodiments, the fiber cement products of the present invention may comprise fibrils fibrids, such as for example but not limited to, polyolefinic fibrils fibrids in a weight % of about 0.1 to 3, such as "synthetic wood pulp".

According to certain particular embodiments, the fiber cement products of the present invention comprise 20 to 95 weight % cement as hydraulic binder.

Cement in the products of the invention is selected from the group consisting of Portland cement, cement with high alumina content, Portland cement of iron, trass-cement, slag cement, plaster, calcium silicates formed by autoclave treatment and combinations of particular binders. In more particular embodiments, cement in the products of the invention is Portland cement.

According to particular embodiments, the fiber cement products according to the invention optionally comprise further components. These further components in the fiber cement products of the present invention may be selected from the group consisting of water, sand, silica sand flour, condensed silica fume, microsilica, fly-ashes, amorphous silica, ground quartz, the ground rock, clays, pigments, kaolin, metakaolin, blast furnace slag, carbonates, pozzolanas, aluminium hydroxide, wollastonite, mica, perlite, calcium carbonate, and other additives (e.g. colouring additives) etc. It will be understood that each of these components is present in suitable amounts, which depend on the type of the specific fiber cement product and can be determined by the person skilled in the art. In particular embodiments, the total quantity of such further components is preferably lower than 70 weight % compared to the total initial dry weight of the composition.

Further additives that may be present in the fiber cement products of the present invention may be selected from the group consisting of dispersants, plasticizers, antifoam agents and flocculants. The total quantity of additives is preferably between about 0.1 and about 1 weight % compared to the total initial dry weight of the composition.

The coating composition is applied to the fiber cement as a wet coating weight in the range from about 350 to about 700 g/m², in particular from about 380 to about 610 g/m², more in particular from about 420 to about 520 g/m², in a known manner, for example by spraying, troweling, knife application, brushing, rolling, curtain coating or pouring onto the cement bonded board, or by a combination of one or more applications. In particular embodiments, the coating composition is preferably applied by spraying.

Thus the coating compositions described herein can be applied to a surface of a fiber cement product using a brush, blade, roller, sprayer (e.g., air-assisted or airless, electrostatic), vacuum coater, curtain coater, flood coater or any suitable device that promotes an even distribution of the coating composition over the surface, even if the surface is damaged, worn, or cracked. The coating compositions may be applied to provide a smooth surface, colored surface or textured surface. A portion or an entire surface of the fiber cement product may be coated at one time. In addition or as an alternative, all or a portion of the surface may be coated more than one time to achieve the desired thickness, gloss, and/or surface effect. The amount of coverage obtained by a quantity of the composition will vary depending on the desire and/or condition of the surface to be covered and the thickness of the coating applied.

In a third aspect, the present invention provides processes for producing a coated fiber cement product of the present invention.

A first step in these processes of the present invention is providing a fiber cement product, which can be performed according to any method known in the art for preparing fiber cement products, essentially consisting of at least water, cement and fibers.

In this step, a fiber cement slurry can first be prepared by one or more sources of at least cement, water and fibers. In certain specific embodiments, these one or more sources of at least cement, water and fibers are operatively connected to a continuous mixing device constructed so as to form a cementitious fiber cement slurry. In particular embodiments, when using cellulose fibers or the equivalent of waste paper fibers, a minimum of about 3%, such as about 4%, of the total slurry mass of these cellulose fibers is used. In further particular embodiments, when exclusively cellulose fibers are used, between about 4% to about 12%, such as more particularly, between about 7% and about 10%, of the total slurry mass of these cellulose fibers is used. If cellulose fibers are replaced by short mineral fibers such as rock wool, it is most advantageous to replace them in a proportion of 1.5 to 3 times the weight, in order to maintain approximately the same content per volume. In long and cut fibers, such as glass fiber rovings or synthetic high-module fibers, such as polypropylene, polyvinyl acetate, polycarbonate or acrylonitrile fibers the proportion can be lower than the proportion of the replaced cellulose fibers. The fineness of the fibers (measured in Shopper-Riegler degrees) is in principle not critical to the processes of the invention. Yet in particular embodiments, it has been found that a range between about 15 DEG SR and about 45 DEG SR can be particularly advantageous for the processes of the invention.

Once a fiber cement slurry is obtained, the manufacture of the fiber-reinforced cement products can be executed according to any known procedure. The process most widely used for manufacturing fiber cement products is the Hatschek process, which is performed using a modified sieve cylinder paper making machine. Other manufacturing processes include the Magnani process, injection, extrusion, flow-on and others. In particular embodiments, the fiber cement products of the present invention are provided by using the Hatschek process. The "green" or uncured fiber cement product is optionally post-compressed usually at pressures in the range from about 22 to about 30 MPa to obtain the desired density.

The processes according to the present invention may further comprise the step of cutting the fiber cement products to a predetermined length to form a fiber cement product. Cutting the fiber cement products to a predetermined length can be done by any technique known in the art, such as but not limited to water jet cutting, air jet cutting or the like. The fiber cement products can be cut to any desirable length, such as but not limited to a length of between about 1 m and about 15 m, such as between about 1 m and about 10 m, more particularly between about 1 m and about 5 m, most particularly between about 1 m and about 3 m.

It will be understood by the skilled person that the processes of the present invention may further comprise additional steps of processing the produced fiber cement products.

For instance, in certain particular embodiments, during the processes of the present invention, the fiber cement slurry and/or the fiber cement products may undergo various intermediate treatments, such as but not limited to treatment with one or more hydrophobic agents, treatment with one or more flocculants, additional or intermediate pressing steps, etc.

As soon as the fiber cement products are formed, these are trimmed at the lateral edges. The border strips can optionally be recycled through immediate mixing with the recycled water and directing the mixture to the mixing system again.

In particular embodiments, the obtained fiber cement products are cured. Indeed, after production, fiber cement products can be allowed to cure over a time in the environment in which they are formed, or alternatively can be subjected to a thermal cure (e.g. by autoclaving or the like).

In further particular embodiments, the "green" fiber cement product is cured, typically by curing to the air (air cured fiber cement products) or under pressure in presence of steam and increased temperature (autoclave cured). For autoclave cured products, typically sand is added to the original fiber cement slurry. The autoclave curing in principle results in the presence of 11.3 A (angstrom) Tobermorite in the fiber cement product.

In yet further particular embodiments, the "green" fiber cement product may be first pre-cured to the air, after which the pre-cured product is further air-cured until it has its final strength, or autoclave-cured using pressure and steam, to give the product its final properties.

In particular embodiments of the present invention, the processes may further comprise the step of thermally drying the obtained fiber cement products. After curing, the fiber cement product being a panel, sheet or plate, may still comprise a significant weight of water, present as humidity. This may be up to 10 even 15 %wt, expressed per weight of the dry product. The weight of dry product is defined as the weight of the product when the product is subjected to drying at 105°C in a ventilated furnace, until a constant weight is obtained.

In certain embodiments, the fiber cement product is dried. Such drying is done preferably by air drying and is terminated when the weight percentage of humidity of the fiber cement product is less than or equal to 8 weight %, even less than or equal to 6 weight %, expressed per weight of dry product, and most preferably between 4 weight % and 6 weight %, inclusive.

The next step in the processes of the present invention for producing coated fiber cement products comprises applying to at least part of the outer surface of the fiber cement product, one or more layers of a coating composition, which composition at least comprises from about 5 to about 60% by weight of metakaolin and/or fly ash, an alkali metal (M) silicate wherein the molar ratio of SiO₂ versus M₂O in said alkali metal silicate is between about 1 and about 2, preferably between about 1.2 and about 1.5, and water and wherein the molar ratio of Si versus Al in said coating composition is between about 1 and about 5.5, preferably between about 2.3 and about 5.3, and wherein the coating composition further comprises an accelerator consisting of zinc oxide (ZnO) to trap free alkali silicate thereby stopping efflorescence.

Further characteristics of the coating layer are as defined and described above for the coating compositions according to the invention.

A further step in the processes of the present invention for producing coated fiber cement products comprises curing the one or more layers of the coating composition so as to obtain a coated fiber cement product. In principle, any suitable curing step known in the art for drying and hardening geopolymeric coating compositions can be applied. Typical curing conditions for the coating composition of the present invention include a short phase (e.g. minimum about 30 minutes, preferably between about 30 and about 60 minutes), at elevated temperature, e.g. higher than about 30°C, for example from about 40 to about 150°C, preferably from about 80 to about 90°C and if needed a longer phase (several days) at room temperature.

The dry thickness of the coating layer is generally from about 70 to about 130 micrometers, preferably from about 90 to about 110 micrometers.

Depending on the required resistance and durability of the coated fiber cement product of the present invention a single coating layer or two or more coating layers obtained from the present geopolymeric coating composition can be provided on the fiber cement.

In particular embodiments of the present invention only a single coating layer is provided on the outer surface of the fiber cement. Said single coating layer is preferably derived from a geopolymeric coating composition comprising next to the alkali metal silicate, metakaolin/fly ash and water also ground blast furnace slag and fumed silica in the amounts as described above and cured at elevated temperatures as described above. Alternatively said single coating layer can also be obtained from a geopolymeric coating composition comprising next to the alkali metal silicate, metakaolin/fly ash and water also fumed silica in the amounts as described above and no ground blast furnace slag and cured at elevated temperatures as described above for a period of at least 30 minutes.

In other particular embodiments of the present invention two coating layers derived from different geopolymeric coating compositions according to the present invention are provided on top of each other.

Processes for producing such dual coated fiber cement products involve applying a first coating composition to at least part of the outer surface of the fiber cement product, partially curing said first coating composition, applying a second coating composition to the surface of the first coating layer before said first coating layer has been fully cured and curing said second coating composition. The second coating is applied to the surface of the first coating layer before said first coating layer has been fully cured so as to provide sufficient adhesion of the second coating layer to the first coating layer. Said first coating composition preferably comprises next to the alkali metal silicate, metakaolin/fly ash, accelerator and water also ground blast furnace slag in the amounts as described above and no fumed silica whereas said second coating composition preferably comprises next to the alkali metal silicate, metakaolin/fly ash and water also fumed silica in the amounts as described above and no ground blast furnace slag.

The first coating composition is partially cured before the second coating composition is applied. Typically this curing step involves curing for a short period (e.g. about 10 minutes) at ambient temperature (about 20 to about 25°C). Curing of the second coating composition then takes place at elevated temperatures as described above for a period of at least about 30 minutes, preferably at least about 60 minutes.

Alternatively the first coating composition is cured at elevated temperatures (e.g. about 85°C) for a short period (e.g. about 10 minutes) so that it is touch dry and the second coating composition is applied directly to the still hot fiber cement product and cured at elevated temperature for a period of at least about 30 minutes. In this case a coated fiber cement product with a structured surface is obtained instead of a smooth surface.

Fiber cement products according to the present invention may be used as a building material. These fiber cement building materials may be porous materials comprising one or more different materials such as a gypsum composite, cement composite, geopolymer composite or other composites having an inorganic binder. The surface of the material may be sanded, machined, extruded, molded or otherwise formed into any desired shape by various processes known in the art. The fiber cement building materials may be fully cured, partially cured or in the uncured "green" state. Fiber cement building materials may further include gypsum board, fiber cement board, fiber cement board reinforced by a mesh or continuous fibers, gypsum board reinforced by short fibers, a mesh or continuous fibers, inorganic bonded wood and fiber composite materials, geopolymer bonded wood and fiber boards, concrete roofing tile material, and fiber-plastic composite material.

In particular embodiments, the fiber cement products of the invention are fiber cement sheets produced by the processes of the present invention and can be used to provide an outer surface to walls, both internal as well as external, a building or construction, e.g. as façade plate, siding, etc.

### EXAMPLES

It will be appreciated that the following examples, given for purposes of illustration, are not to be construed as limiting the scope of this invention. Although only a few exemplary embodiments of this invention have been described in detail above, those skilled in the art will readily appreciate that many modifications are possible in the exemplary embodiments without materially departing from the novel teachings and advantages of this invention. Accordingly, all such modifications are intended to be included within the scope of this invention that is defined in the following claims and all equivalents thereto. Further, it is recognized that many embodiments may be conceived that do not achieve all of the advantages of some embodiments, yet the absence of a particular advantage shall not be construed to necessarily mean that such an embodiment is outside the scope of the present invention.

### Example 1: Production of a single coated fiber cement sheet according to the process of the invention

Fiber cement sheets were produced according to a conventional Hatschek process and cured thereafter.

The sheets were subsequently coated with a geopolymeric coating having a composition as listed in Table 1 below. The coating was cured by drying at 80 to 90°C for minimum 30 minutes.

**Table 1**

| Ingredient | | Amount (g) | wt% (dry material) |
|---|---|---|---|
| | | | |
| ECOCEM | Ground blast furnace slag (from Ecocem) | 15 | 4.25 |
| ARGICAL M1200S | Metakaolin (from Imerys) | 40 | 11.33 |
| Mineral Filler | | 63.4 | 17.96 |
| | | | |
| Pigments | | 20.0 | 5.67 |
| | | | |
| Geosil 14515 | Potassium silicate (from Woellner) | 94.8 | 13.7 |
| KOH 50% | Potassium hydroxide (from Brenntag) | 11.4 | |
| Water | | 31.8 | |
| | | | |
| Water | | 49.44 | 39.4 |
| | | | |
| Zinc Oxide | Accelerator (from Silar S.A.S.) | 9.44 | 2.67 |
| Wetting agent | | 0.11 | 0.03 |
| | | | |
| Fumed silica | | 17.6 | 4.99 |
| | | | |
| TOTAL | | 353.0 | 100.00 |
| | | | |
| | | Molar Ratio | |
| | | | |
| K₂O/SiO₂ | | 0.26 | |
| SiO₂/Al₂O₃ | | 6.49 | |
| H₂O/K₂O | | 18.04 | |
| K₂O/Al₂O₃ | | 1.66 | |
| | | | |
| Si/Al | | 3.24 | |
| | | | |
| SiO₂/K₂O | | 1.23 | |

Finally, the fiber cement sheets were subjected to a number of tests in order to characterize their physical and chemical properties. Results are presented in Table 2 below and compared to the properties of a fiber cement sheet coated with an organic coating of the prior art.

**Table 2**

| **TESTING RESULTS** | | **Organic high performance fiber-cement coating** | **Single layer geopolymeric coating according to Table 1** |
|---|---|---|---|
| Substrate nature | | Autoclaved fiber-cement façade board | Autoclaved fiber-cement façade board |
| Adhesion tape test | | **5** | **5** |
| CROSS CUT Adhesion test - ISO 2409 | | **ISO 3** | **ISO 2** |
| PERSOZ surface hardness (s) | | 143 | 210 |
| SHORE D core hardness (Shore units) | | 89 | 93 |
| Water / heat resistance test I (96°C 15min) | | **5** | **5** |
| Water / heat resistance test II (60°C 4 days) | | **5** | **5** |
| Efflorescence resistance test | | **5** | **5** |
| Water vapour resistance test | | **5** | **5** |
| Freeze-thaw resistance test | Tap water - 25 cycles | **1** | **4** |
| | Salt water 3% - 25 cycles | **2** | **2** |
| ***Quotes range from 0 (very bad) to 5 (very good) except Cross Cut for which quotation is reversed*** | | | |

Based on the above results, it can generally be concluded that the single coated fiber cement products of the present invention have very good surface properties and physical properties (mechanical, chemical and heat resistance), comparable or even improved versus traditional organically coated fiber cement products.

### Example 2: Influence of fumed silica level in a single coated fiber cement sheet of the present invention

Fiber cement sheets were produced according to Example 1 above with varying amounts of fumed silica and various properties were measured. The results are presented in Table 3 below.

**Table 3**

| **Fumed silica level** (% by weight on total formulation) | **Si/Al** Molar ratio | **Presence of cracks** on the coating surface | **Persoz surface hardness** (s) | **Taber abrasion test** (nb of cycles before complete failure) | **Sclerometer test** Force needed to scratch the surface (N) | **Shore D core hardness** (Shore units) |
|---|---|---|---|---|---|---|
| **0** | 2.39 | No | 181 | 50 | 5 | 79 |
| **3** | 2.89 | No | 180 | 50 | 5 | 82 |
| **4** | 3.07 | No | 192 | 60 | 6 | 78 |
| **5** | 3.24 | No | 210 | 61 | 8 | 93 |
| **7** | 3.61 | No | 201 | 75 | 11 | 86 |
| **8.5** | 3.81 | Yes | 226 | Not measured | 10 | 92 |
| **10.6** | 4.20 | Yes | 302 | Not measured | 14 | 93 |

These results show that in order to obtain satisfactory properties set for such a single coated fiber cement product the fumed silica level in the geopolymeric coating composition should preferably be selected so that the Si/AI molar ratio does not exceed 3.7.

### Example 3: Production of a dual coated fiber cement sheet according to the process of the invention

Fiber cement sheets were produced according to a conventional Hatschek process and cured thereafter.

The sheets were subsequently coated with a first geopolymeric coating having a composition as listed in Table 4 below. The coating was cured for exactly 10 minutes at ambient temperature (20 to 25°C). Thereafter a second geopolymeric coating having a composition as listed in Table 5 below was applied to the surface of the first coating layer and dried at 80 to 90°C for minimum 30 minutes.

Finally, the fiber cement sheets were subjected to a number of tests in order to characterize their physical and chemical properties. Results are presented in Table 6 below and compared to the properties of a fiber cement sheet coated with an organic coating of the prior art.

**Table 4**

| Ingredient | | Amount (g) | wt% (dry material) |
|---|---|---|---|
| | | | |
| ECOCEM | Ground blast furnace slag (from Ecocem) | 15 | 3.78 |
| ARGICAL M1200S | Metakaolin (from Imerys) | 40 | 10.08 |
| Mineral Filler | | 185 | 46.60 |
| | | | |
| Geosil 14515 | Potassium silicate (from Woellner) | 94.8 | 12.18 |
| KOH 50% | Potassium hydroxide (from Brenntag) | 11.4 | |
| Water | | 31.8 | |
| | | | |
| Water | | 9.44 | 24.96 |
| | | | |
| Zinc oxide | Accelerator (from Silar S.A.S.) | 9.44 | 2.38 |
| Wetting agent | | 0.11 | 0.03 |
| | | | |
| | | | |
| TOTAL | | 397.0 | 100.00 |
| | | | |
| | | Molar Ratio | |
| | | | |
| K₂O/SiO₂ | | 0.35 | |
| SiO₂/Al₂O₃ | | 4.77 | |
| H₂O/K₂O | | 18.04 | |
| K₂O/Al₂O₃ | | 1.66 | |
| | | | |
| Si/Al | | 2.39 | |
| | | | |
| SiO₂/K₂O | | 1.23 | |

**Table 5**

| Ingredient | | Amount (g) | wt% (dry material) |
|---|---|---|---|
| | | | |
| Polyol | Flexibilizer | 2.5 | 0.83 |
| ARGICAL M1200S | Metakaolin (from Imerys) | 40 | 13.28 |
| Monopropylene glycol | Flexibilizer | 2.5 | 0.83 |
| | | | |
| Pigments | | 20.0 | 6.64 |
| | | | |
| Geosil 14515 | Potassium silicate (from Woellner) | 89.3 | 15.11 |
| KOH 50% | Potassium hydroxide (from Brenntag) | 10.7 | |
| Water | | 30 | |
| | | | |
| Water | | | 28.03 |
| | | | |
| Zinc oxide | Accelerator (from Silar S.A.S.) | 5 | 1.66 |
| Wetting Agent | | 1.3 | 0.43 |
| | | | |
| Mineral Filler | | 45 | 14.94 |
| | | | |
| Fumed silica | | 55 | 18.25 |
| | | | |
| TOTAL | | 301.3 | 100.00 |
| | | | |
| | | Molar Ratio | |
| | | | |
| K₂O/SiO₂ | | 0.16 | |
| SiO₂/Al₂O₃ | | 10.46 | |
| H₂O/K₂O | | 18.05 | |
| K₂O/Al₂O₃ | | 1.72 | |
| | | | |
| Si/Al | | 5.23 | |
| | | | |
| SiO₂/K₂O | | 1.23 | |

**Table 6**

| **TESTING RESULTS** | | **Organic high performance fiber-cement coating** | **Dual layer geopolymeric coating according to Tables 4&5** |
|---|---|---|---|
| Substrate nature | | Autoclaved fiber-cement façade board | Autoclaved fiber-cement façade board |
| Adhesion tape test | | 5 | 5 |
| CROSS CUT Adhesion test - ISO 2409 | | ISO 3 | ISO 1 |
| Water/heat resistance test I (96°C 15min) | | 5 | 5 |
| Water vapour resistance test | | 5 | 5 |
| Freeze-thaw resistance test | Tap water - 25 cycles | 1 | 1 |
| | Salt water 3% - 25 cycles | 2 | 3 |
| ***Quotes range from 0 (very bad) to 5 (very good) except Cross Cut for which quotation is reversed*** | | | |

Based on the above results, it can generally be concluded that the dual coated fiber cement products of the present invention have very good surface properties and physical properties (mechanical, chemical and heat resistance) ), comparable or even improved versus traditional organically coated fiber cement products.

### Example 4: Influence of the presence of GGBS in the first coating layer in a dual coated fiber cement product of the present invention

Fiber cement sheets were produced according to Example 3 above with the amount of GGBS as indicated in Table 4 above and compared with a similar system having no GGBS in the first geopolymer coating layer. The results are presented in Table 7 below.

**Table 7**

| **TESTING Results** | | **Dual coat geopolymer system No GGBS in 1st coat** | **Dual coat Geopolymer according to Tables 4 & 5** |
|---|---|---|---|
| **Substrate nature** | | Autoclaved fiber-cement façade board | Autoclaved fiber-cement façade board |
| **Adhesion tape test** | | 5 | 5 |
| **CROSS CUT Adhesion test - ISO 2409** | | ISO 2 | ISO 1 |
| **Water/heat resistance test I (96°C 15min)** | | 4 | 5 |
| **Freeze-thaw test 14 cycles** | **Tap water** | 4 | 4 |
| | **Salted water** | 1 | 2 |
| **Water vapour resistance test** | | 2 | 5 |
| **TABER Abrasion resistance** | | 10 | 45 |
| **H18 130681 1/4** | | | |
| **Nb of cycles before complete failure** | | | |
| **Sun/Rain exposure test** | | T=0 some microcracks | T=0 OK |
| | | T=24h important microcracking | T=24h No microcracking |
| **Efflorescence resistance test** | | 5 | 5 |
| ***Quotes range from 0 (very bad) to 5 (very good) except Cross Cut for which quotation is reversed*** | | | |

### Example 5: Influence of the presence of polyol flexibilizer in the top coating layer in a dual coated fiber cement product of the present invention

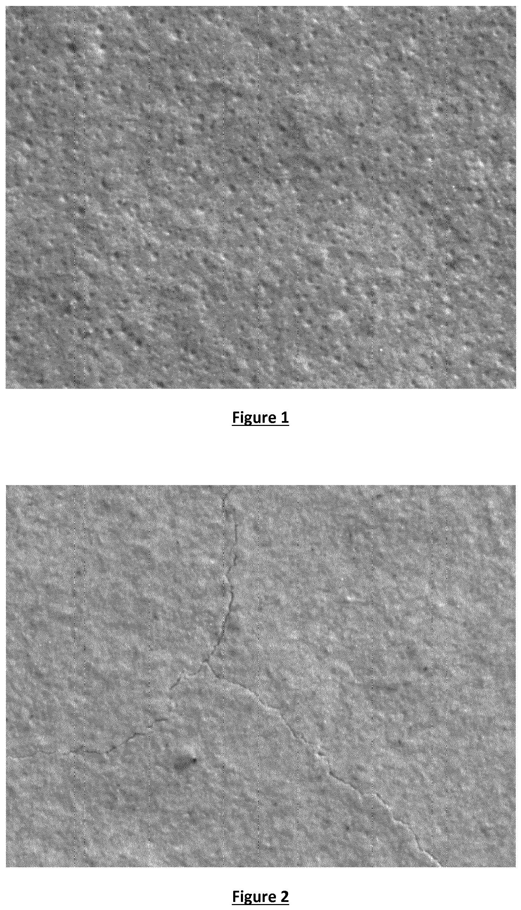

Fiber cement sheets were produced according to Example 3 above with and without polyol flexibilizer in the topcoat. As can be observed from the photographs presented in Figure 1 (with polyol) and Figure 2 (without polyol) the presence of polyol flexibilizers is important for the prevention of microcracks.

### Example 6: Production of a dual coated fiber cement product of the present invention with structured surface

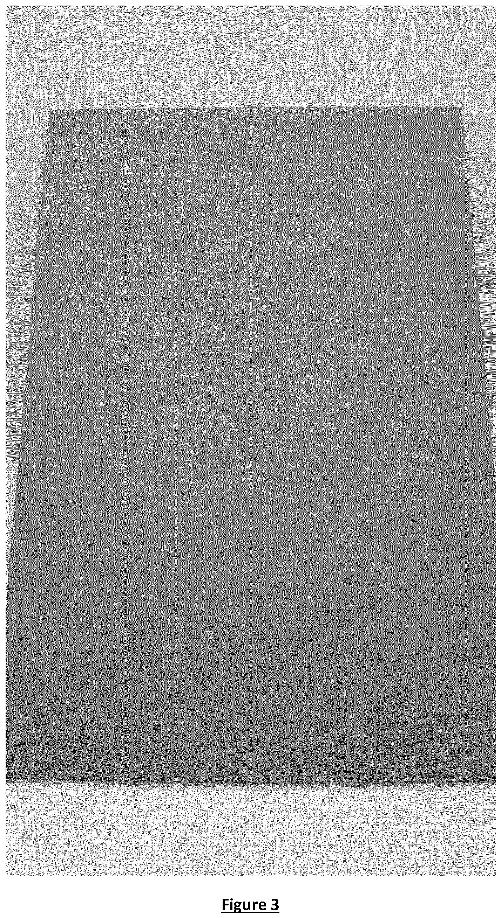

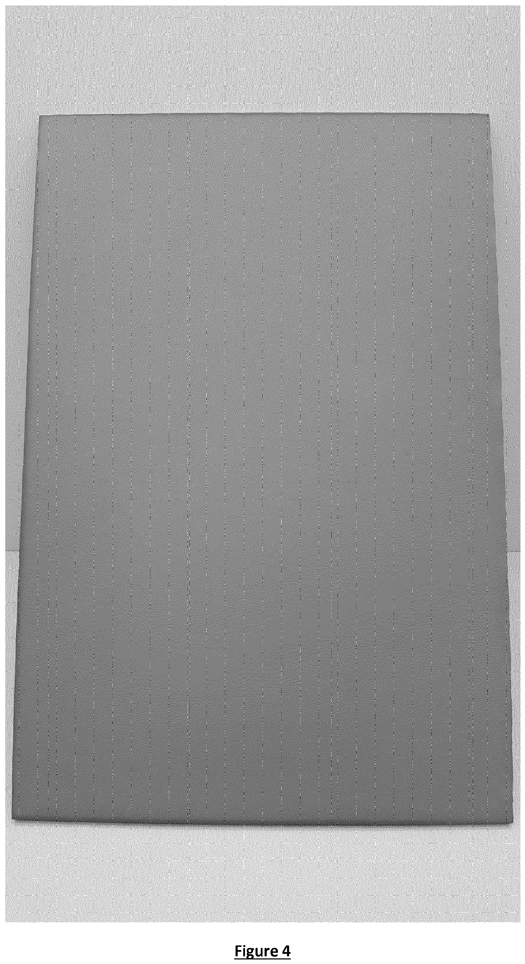

Fiber cement products were produced according to Example 3 above but the first coating composition was cured in an oven at 85°C for 10 minutes and subsequently the second coating composition was applied while the product was still hot. As can be observed from the photographs presented in Figure 3 (product of Example 6) and Figure 4 (product of Example 3) a coated fiber cement product with a structured surface was obtained compared to the products of Example 3 having a smooth surface.

## Claims

1. A coating composition suitable for use on a fiber cement product comprising from about 5 to about 60% by weight of metakaolin and/or fly ash, the % by weight being based on the coating composition, an alkali metal (M) silicate wherein the molar ratio of SiO₂ versus M₂O in said alkali metal silicate is between 1 and 2, preferably between 1.2 and 1.5, and water and wherein the molar ratio of Si versus Al in said coating composition is between 1 and 5.5, preferably between 2.3 and 5.3 and further comprising an accelerator consisting of zinc oxide to trap free alkali silicate thereby stopping efflorescence.

2. A coating composition according to claim 1 wherein metakaolin is used in an amount of 5 to 20% by weight based on the coating composition.

3. A coating composition according to claim 1 or 2 wherein M is potassium.

4. A coating composition according to any one of the preceding claims wherein the amount of alkali metal silicate is between 10 and 20% by weight of dry material.

5. A coating composition according to any one of the preceding claims further comprising ground blast furnace slag and/or fumed silica.

6. A coating composition according to claim 5 wherein the amount of ground blast furnace slag is between 1 and 15% by weight based on the coating composition and/or
wherein the amount of fumed silica is between 4 and 20% by weight based on the coating composition.

7. A coating composition according to any one of the preceding claims further comprising mineral pigments in an amount of 5 to 15% by weight based on the coating composition and/or mineral fillers in an amount of 10 to 60% by weight based on the coating composition.

8. A coating composition according to any one of the preceding claims further comprising additives such as retarders, wetting agents and flexibilizers.

9. A coated fiber cement product comprising on at least part of its outer surface at least one cured coating layer, **characterized in that** said coating layer is obtained from a coating composition as defined in any one of the preceding claims.

10. A coated fiber cement product according to claim 10 comprising a single cured coating layer obtained from said coating composition further comprising ground blast furnace slag and fumed silica.

11. A coated fiber cement product according to claim 10 comprising two cured coating layers on top of each other, a first coating layer (primer layer) provided on at least part of the outer surface of the fiber cement obtained from said coating composition further comprising ground blast furnace slag and no fumed silica and a second coating layer (top layer) provided on at least part of the surface of the first coating layer obtained from said coating composition further comprising fumed silica and no ground blast furnace slag.

12. A process for manufacturing a coated fiber cement product as defined in any one of claims 9 to 11, comprising the steps of:
(i) providing a cured fiber cement product having at least one surface;
(ii) applying said coating composition to at least part of said at least one surface;
(iii) curing said coating composition so as to obtain a cured coating layer.

13. A process according to claim 12 for manufacturing a single coated fiber cement product, wherein said curing step (iii) comprises subjecting the fiber cement product to an elevated temperature, preferably of 80 to 90°C, for a period of at least 30 minutes.

14. A process according to claim 12 for manufacturing a multi coated fiber cement product comprising the further steps of:
(iv) providing a second coating composition onto at least part of the surface of the first coating layer before said first coating composition has been fully cured;
(v) curing said second coating composition so as to obtain a fiber cement coated with two cured coating layers on top of each other.

15. A process according to claim 14 wherein step (iii) comprises subjecting the fiber cement product to ambient temperature of 20 to 25°C for a short period of 10 minutes and step (v) comprises subjecting the fiber cement product to an elevated temperature, preferably of 80 to 90°C, for a period of at least 30 minutes, preferably at least 60 minutes.

## Patentansprüche

1. Beschichtungszusammensetzung, die zur Verwendung auf einem Faserzementprodukt geeignet ist, umfassend zu etwa 5 bis etwa 60 Gew.-% Metakaolin und/oder Flugasche, wobei sich Gew.-% auf die Beschichtungszusammensetzung bezieht, ein Alkalimetall (M)-Silikat, wobei das molare Verhältnis von SiO₂ zu M₂O in dem Alkalimetall-Silikat zwischen 1 und 2, vorzugsweise zwischen 1,2 und 1,5, liegt, und Wasser und wobei das molare Verhältnis von Si zu AI in der Beschichtungszusammensetzung zwischen 1 und 5,5, vorzugsweise zwischen 2,3 und 5,3, liegt, und ferner umfassend einen Beschleuniger, bestehend aus Zinkoxid, um freies Alkalisilikat abzufangen, dadurch Ausblühung zu stoppen.

2. Beschichtungszusammensetzung nach Anspruch 1, wobei Metakaolin in einer Menge von 5 bis 20 Gew.-%, bezogen auf die Beschichtungszusammensetzung, verwendet wird.

3. Beschichtungszusammensetzung nach Anspruch 1 oder 2, wobei M Kalium ist.

4. Beschichtungszusammensetzung nach einem der vorstehenden Ansprüche, wobei die Menge an Alkalimetall-Silikat zwischen 10 und 20 Gew.-% Trockenmaterial liegt.

5. Beschichtungszusammensetzung nach einem der vorstehenden Ansprüche, ferner umfassend gemahlene Hochofenschlacke und/oder gedämpftes Siliciumdioxid.

6. Beschichtungszusammensetzung nach Anspruch 5, wobei die Menge an gemahlener Hochofenschlacke zwischen 1 und 15 Gew.-%, bezogen auf die Beschichtungszusammensetzung, liegt und/oder
wobei die Menge an gedämpftem Siliciumdioxid zwischen 4 und 20 Gew.-%, bezogen auf die Beschichtungszusammensetzung, liegt.

7. Beschichtungszusammensetzung nach einem der vorstehenden Ansprüche, ferner umfassend mineralische Pigmente in einer Menge von 5 bis 15 Gew.-%, bezogen auf die Beschichtungszusammensetzung, und/oder mineralische Füllstoffe in einer Menge von 10 bis 60 Gew.-%, bezogen auf die Beschichtungszusammensetzung.

8. Beschichtungszusammensetzung nach einem der vorstehenden Ansprüche, ferner umfassend Zusatzstoffe wie Verzögerer, Benetzungsmittel und Flexibilisatoren.

9. Beschichtetes Faserzementprodukt, umfassend auf mindestens einem Teil seiner Außenoberfläche mindestens eine gehärtete Beschichtungsschicht, **dadurch gekennzeichnet, dass** die Beschichtungsschicht aus einer Beschichtungszusammensetzung nach einem der vorstehenden Ansprüche erhalten wird.

10. Beschichtetes Faserzementprodukt nach Anspruch 10, umfassend eine einzelne gehärtete Beschichtungsschicht, die aus der Beschichtungszusammensetzung, ferner umfassend gemahlene Hochofenschlacke und gedämpftes Siliciumdioxid, erhalten wird.

11. Beschichtetes Faserzementprodukt nach Anspruch 10, umfassend zwei gehärtete Beschichtungsschichten übereinander, eine erste Beschichtungsschicht (Grundierungsschicht), die auf mindestens einem Teil der Außenoberfläche des Faserzements bereitgestellt ist, das aus der Beschichtungszusammensetzung erhalten wird, ferner umfassend gemahlene Hochofenschlacke und kein gedämpftes Siliciumdioxid, und eine zweite Beschichtungsschicht (Deckschicht), die auf mindestens einem Teil der Oberfläche der ersten Beschichtungsschicht bereitgestellt ist, die aus der Beschichtungszusammensetzung erhalten wird, ferner umfassend gedämpftes Siliciumdioxid und keine gemahlene Hochofenschlacke.

12. Verfahren zum Herstellen eines beschichteten Faserzementprodukts nach einem der Ansprüche 9 bis 11, umfassend die Schritte:
(i) Bereitstellen eines gehärteten Faserzementprodukts, das mindestens eine Oberfläche aufweist;
(ii) Aufbringen der Beschichtungszusammensetzung auf mindestens einen Teil der mindestens einen Oberfläche;
(iii) Härten der Beschichtungszusammensetzung, um eine gehärtete Beschichtungsschicht zu erhalten.

13. Verfahren nach Anspruch 12 zum Herstellen eines einzelnen beschichteten Faserzementprodukts, wobei der Aushärtungsschritt (iii) ein Aussetzen des Faserzementprodukts einer erhöhten Temperatur, vorzugsweise von 80 bis 90 °C, für einen Zeitraum von mindestens 30 Minuten umfasst.

14. Verfahren nach Anspruch 12 zum Herstellen eines mehrfach beschichteten Faserzementprodukts, umfassend die weiteren Schritte:
(iv) Bereitstellen einer zweiten Beschichtungszusammensetzung auf mindestens einem Teil der Oberfläche der ersten Beschichtungsschicht, bevor die erste Beschichtungszusammensetzung vollständig gehärtet ist;
(v) Härten der zweiten Beschichtungszusammensetzung, um ein Faserzement zu erhalten, der mit zwei gehärteten Beschichtungsschichten übereinander beschichtet ist.

15. Verfahren nach Anspruch 14, wobei Schritt (iii) das Aussetzen des Faserzementprodukts einer Umgebungstemperatur von 20 bis 25 °C für einen kurzen Zeitraum von 10 Minuten umfasst und Schritt (v) das Aussetzen des Faserzementprodukts einer erhöhten Temperatur, vorzugsweise von 80 bis 90 °C, für einen Zeitraum von mindestens 30 Minuten, vorzugsweise mindestens 60 Minuten, umfasst.

## Revendications

1. Composition de revêtement appropriée pour une utilisation sur un produit de fibrociment comprenant d'environ 5 à environ 60 % en poids de métakaolin et/ou de cendres volantes, le % en poids étant sur la base de la composition de revêtement, un silicate de métal alcalin (M) dans lequel le rapport molaire de SiO₂ contre M₂O dans ledit silicate de métal alcalin est entre 1 et 2, de préférence entre 1,2 et 1,5, et l'eau et dans laquelle le rapport molaire de Si contre Al dans ladite composition de revêtement est compris entre 1 et 5,5, de préférence entre 2,3 et 5,3 et comprenant en outre un accélérateur constitué d'oxyde de zinc pour piéger le silicate alcalin libre, arrêtant ainsi l'efflorescence.

2. Composition de revêtement selon la revendication 1, dans laquelle le métakaolin est utilisé en une quantité de 5 à 20 % en poids sur la base de la composition de revêtement.

3. Composition de revêtement selon la revendication 1 ou 2, dans laquelle M est le potassium.

4. Composition de revêtement selon l'une quelconque des revendications précédentes, dans laquelle la quantité de silicate de métal alcalin est comprise entre 10 et 20 % en poids de matière sèche.

5. Composition de revêtement selon l'une quelconque des revendications précédentes comprenant en outre une scorie de haut fourneau moulu et/ou de la silice sublimée.

6. Composition de revêtement selon la revendication 5, dans laquelle la quantité de scorie de haut fourneau moulu est comprise entre 1 et 15 % en poids sur la base de la composition de revêtement et/ou
dans laquelle la quantité de silice sublimée est comprise entre 4 et 20 % en poids sur la base de la composition de revêtement.

7. Composition de revêtement selon l'une quelconque des revendications précédentes comprenant en outre des pigments minéraux en une quantité de 5 à 15 % en poids sur la base de la composition de revêtement et/ou de charges minérales en une quantité de 10 à 60 % en poids sur la base de la composition de revêtement.

8. Composition de revêtement selon l'une quelconque des revendications précédentes comprenant en outre des additifs tels que des retardateurs, des agents mouillants et des adjuvants d'assouplissement.

9. Produit de fibrociment revêtu comprenant sur au moins une partie de sa surface externe au moins une couche de revêtement durcie,
**caractérisé en ce que** ladite couche de revêtement est obtenue à partir d'une composition de revêtement telle que définie dans l'une quelconque des revendications précédentes.

10. Produit de fibrociment revêtu selon la revendication 10, comprenant une couche de revêtement durcie unique obtenue à partir de ladite composition de revêtement comprenant en outre un scorie de haut fourneau moulu et de la silice sublimée.

11. Produit de fibrociment revêtu selon la revendication 10 comprenant deux couches de revêtement durcies au-dessus l'une de l'autre, une première couche de revêtement (couche d'apprêt) fournie sur au moins une partie de la surface externe du fibrociment obtenu à partir de ladite composition de revêtement comprenant en outre un scorie de haut fourneau moulu et aucune silice sublimée et une seconde couche de revêtement (couche supérieure) fournie sur au moins une partie de la surface de la première couche de revêtement obtenue à partir de ladite composition de revêtement comprenant en outre de la silice sublimée et aucun scorie de haut fourneau moulu.

12. Procédé de fabrication d'un produit de fibrociment revêtu tel que défini dans l'une quelconque des revendications 9 à 11, comprenant les étapes consistant à :
(i) fournir un produit de fibrociment durci ayant au moins une surface ;
(ii) appliquer ladite composition de revêtement sur au moins une partie de ladite au moins une surface ;
(iii) durcir ladite composition de revêtement de façon à obtenir une couche de revêtement durcie.

13. Procédé selon la revendication 12 pour fabriquer un produit de fibrociment revêtu unique, dans lequel ladite étape de durcissement (iii) comprend la soumission du produit de fibrociment à une température élevée, de préférence de 80 à 90 °C, pendant une période d'au moins 30 minutes.

14. Procédé selon la revendication 12 pour fabriquer un produit de fibrociment multicouche comprenant les étapes supplémentaires consistant à :
(iv) fournir une seconde composition de revêtement sur au moins une partie de la surface de la première couche de revêtement avant que ladite première composition de revêtement n'ait été complètement durcie ;
(v) le durcissement de ladite seconde composition de revêtement de façon à obtenir un fibrociment revêtu avec deux couches de revêtement durcies au-dessus l'une de l'autre.

15. Procédé selon la revendication 14 dans lequel l'étape (iii) comprend la soumission du produit de fibrociment à une température ambiante de 20 à 25 °C pendant une période courte de 10 minutes et l'étape (v) comprend la soumission du produit de fibrociment à une température élevée, de préférence de 80 à 90 °C, pendant une période d'au moins 30 minutes, de préférence d'au moins 60 minutes.
